# FASCICULE DE BREVET EUROPEEN

(11) **EP 0 871 525 B1**
(45) Date de publication et mention de la délivrance du brevet: **13.02.2002**
(21) Numéro de dépôt: 96921837.9
(22) Date de dépôt: 21.06.1996
(51) Int. Cl.: B01D 3/38, C01B 25/234, C01B 25/223, C01F 11/46, C01B 25/26, C01B 17/90, C01B 17/96, C02F 5/00, C02F 1/26

(54) **PROCEDE DE PURIFICATION PAR EXTRACTION D'UN MILIEU LIQUIDE**
REINIGUNGSMETHODE MITTELS EXTRAKTION EINES FLÜSSIGEN MEDIUMS.
LIQUID MEDIUM EXTRACTION PURIFICATION METHOD

(30) Priorité: 21.06.1995 BE 9500548
(43) Date de publication de la demande: 21.10.1998
(73) Titulaire: Culot, Michel Vital Jean, 1410 Waterloo (BE); Takhim, Mohamed, Khouribga (MA)
(72) Inventeur: TAKHIM, Mohamed, Khouribga (MA)
(74) Mandataire: Claeys, Pierre
(86) Numéro de dépôt international: BE9600066
(87) Numéro de publication internationale: WO9700714

(56) Documents cités:
- EP-A- 0 401 631
- FR-A- 2 264 774
- CHEMICAL ABSTRACTS, vol. 60, no. 6, 16 Mars 1964 Columbus, Ohio, US; abstract no. 6515e, XP002011623 cité dans la demande & JP,C,00 011 105 (TAKI FERTILIZER MANUFG. CO., LTD.) 4 Juillet 1963
- CHEMICAL ABSTRACTS, vol. 86, no. 26, 27 Juin 1977 Columbus, Ohio, US; abstract no. 191964a, page 108; XP002011624 cité dans la demande & JP,A,76 143 597 (MITSUI TOATSU CHEMICALS, INC.) 9 Décembre 1976

## Description

La présente invention est relative à un procédé de purification d'acide phosphorique et/ou de ses dérivés par extraction à partir d'un milieu liquide contenant de l'acide phosphorique.

Parmi les procédés de purification industriels pratiqués on peut en citer de nombreux qui sont énumérés ci-après avec leurs inconvénients entre parenthèses : le relargage (distillation de l'agent modificateur de solubilité), la précipitation (acide ou base de déplacement de l'agent précipitant et distillation parfois azéotropique), l'extraction liquide/liquide (parfois à deux solvants coûteux, avec regénération et perte progressive d'efficacité des solvants), la flottation ionique (longue et coûteuse), les résines échangeuses d'ions (difficiles d'application en milieu acide) et l'électrolyse (peu efficace, énergivore).

Dans le cas particulier de la production d'acide phosphorique pur ou extra-pur, si l'on exclut la synthèse, elle se fait aujourd'hui principalement par deux méthodes : soit par la voie "sèche", énergivore, des fours à plus de 1000°C "minerais-coke-silice", suivie du barbotage dans H₂O du P₂O₅ qui en est extrait, soit par la voie "humide" d'attaque par un acide, principalement l'acide sulfurique (dont la production exothermique est très appréciée), mais aussi les acides nitrique (corrosif avec dégagements de NOx nocifs), chlorhydrique (très corrosif) ou perchlorique (risques d'explosion), de minerais de phosphate préconditionnés (calcination, broyage, tamisage), avec obtention d'une solution d'acide phosphorique brut. Les sels de Ca formés suivant l'acide d'attaque, sont éliminés par cristallisation des sulfates (de 80°C à 110°C) ou des nitrates (à une température < -5°C et d'une filtrabilité faible) ou encore en procédant à une extraction liquide/liquide de l'acide phosphorique en abandonnant les chlorures de calcium. Les solutions d'acide brut sont ensuite concentrées par évaporation (vapeurs nocives) jusqu'à 40% ou 56% en P₂O₅ (solution brute, parfois appelée acide "vert" ou "noir" dans le cas de l'attaque sulfurique).

Le procédé par voie humide sulfurique, qui couvre la majorité du tonnage mondial des phosphates valorisés, dirige ensuite l'acide vert soit vers la fabrication de sels de phosphates (par exemple de superphosphates et phosphates azotés pour engrais), soit vers une purification aboutissant à de l'acide phosphorique pur ou extra-pur.

Le procédé suivant l'invention a pour but de pallier les inconvénients, indiqués entre parenthèses, des méthodes industrielles courantes de purification précitées.

On connaît par ailleurs des procédés de purification de solutions aqueuses d'acide, telles que des solutions d'acide phosphorique brut, dans lesquels on introduit une substance qui, avec l'acide, forme un précipité sous la forme d'un phosphate. On connaît par exemple l'addition d'urée pour obtenir des cristaux de phosphate d'urée (Chemical Abstracts 84:152820 de la DE-A-2511345), celle de mélamine pour former du phosphate de mélamine (Chemical Abstracts 10:138052) et celle du 1,4-dioxane pour former un produit d'addition (sel) de cette substance et de H₃PO₄ (Chemical Abstracts de la demande japonaise Kokai JP-A-51143597).

Ces procédés s'avèrent relativement compliqués pour séparer l'acide phosphorique du sel ou de l'adduct formé. On fait généralement usage d'acide nitrique pour déplacer l'acide phosphorique et former un nitrate de la substance précipitante. Dans d'autre cas, par élution à l'aide d'une solution aqueuse d'ammonium, on produit du phosphate d'ammonium, en isolant la substance ayant servi à la précipitation, ce qui permet de la recycler.

On connaît aussi un brevet marocain n° 23439, dans lequel on soumet de l'acide phosphorique à l'action d'un composé MSA de composition non spécifiée qui met l'acide phosphorique sous forme purifiable par une simple filtration. Ensuite l'acide phosphorique et le composé MSA sont récupérés séparément dans des réacteurs de régénération. L'étape de régénération n'est pas indiquée non plus dans ce document.

Dans Cellulose, Lignin and Paper-23, 1957, colonne 18606, on décrit la précipitation, à l'aide d'aniline, d'aniline-H₃PO₄ à partir d'une solution contenant des phosphates dissous. A nouveau cet adduct est traité par du NH₃ pour produire du phosphate d'ammonium et l'aniline ne peut être extraite et purifiée à partir du milieu réactionnel qu'à la suite de plusieurs opérations, dont une purification au Ca(OH)₂ et une extraction au benzène.

Dans Chemical Abstracts, vol. 60, colonne 6515, on décrit un procédé de récupération d'acide phosphorique à partir d'une solution contenant de l'acide phosphorique ou des phosphates par traitement avec une amine aromatique, en particulier de l'aniline ou de la p-toluidine, en chauffant à 102°C. Cela donne un phosphate d'amine de haute pureté. Cette référence n'explique toutefois pas comment récupérer de l'acide phosphorique pur à partir du phosphate d'amine.

Tous ces procédés décrivent une opération généralement connue, celle d'une précipitation conjointe de la substance ajoutée au milieu liquide à traiter et d'une substance qui se trouve dans le milieu liquide traité. Ces procédés servent alors à produire un dérivé (par exemple un sel) de l'acide contenu dans le milieu liquide ou de l'agent précipitant, sans parvenir à produire cette substance (l'acide ou son dérivé) à l'état épuré, et simultanément à récupérer de manière recyclable l'agent de précipitation.

La présente invention a pour but de résoudre les problèmes de coût, de pollution, et de consommation d'énergie de la plupart des procédés de séparation de substances à partir d'un milieu liquide.

On résout ces problèmes par un procédé de purification d'acide phosphorique et/ou de ses dérivés par extraction à partir d'un milieu liquide contenant de l'acide phosphorique, comprenant
- au moins une addition au milieu liquide d'un composé organique, entraînable par une vapeur, qui présente une molécule de caractère acido-basique au sens de Lewis dû à au moins un atome de N, O et/ou S formant un ou des sites actifs pourvus d'un doublet électronique libre, ce ou ces doublets électroniques libres étant en résonance avec au moins un autre doublet porté par la molécule, ce composé comportant éventuellement en outre au moins un atome d'hydrogène soumis à une électronégativité issue d'un desdits sites actifs, cette au moins une addition étant effectuée en une quantité suffisante pour donner lieu à un produit de réaction équilibrée entre le composé organique et ledit acide phosphorique et/ou dérivés de celui-ci, réaction où la différence de pKa entre ces derniers est comprise entre 0,1 et 5, et pour provoquer une précipitation de ce produit de réaction équilibrée, sous la forme d'un précipité,
- une séparation par filtration du précipité et une évacuation d'un filtrat contenant des impuretés,
- un entraînement à la vapeur précitée du composé organique susdit à partir du précipité, et
- une récolte sous forme purifiée et isolée dudit acide phosphorique et/ou dérivés de celui-ci à isoler.

On utilise donc, suivant l'invention, une substance de caractère acido-basique au sens de Lewis, qui est capable avec de l'acide phosphorique de former un produit de réaction équilibrée à l'aide de son ou ses doublets électroniques et qui, éventuellement en outre, peut réagir en milieu basique. En effet, ce composé peut avantageusement présenter des atomes d'hydrogène labiles, qui sont soumis à une électronégativité issue d'un desdits sites actifs, ce qui permet de libérer des protons. La différence de pKa entre les réactifs donnant lieu au précipité susmentionné caractérise une réaction d'équilibre. En dehors de la fourchette de pKa = 0,1 à 5, soit la réaction entre le composé organique et la substance à isoler n'a pas lieu, soit elle a lieu au point de donner une réaction complète.

Pour permettre un bon entraînement par une vapeur, conformément à l'invention, le composé organique est avantageusement non miscible à cette vapeur, ou uniquement partiellement. Dans cette condition, lors de l'entraînement, il se produit une volatilisation de plus en plus poussée du composé organique, qui essaye de respecter l'équilibre entre les pressions partielles de la vapeur et de la molécule entraînée. Ce déséquilibre a pour effet en premier lieu de fixer tout reste de composé organique suivant l'invention n'ayant pas réagi avec la substance à isoler, pour rétablir l'équilibre entre le produit soumis à l'entraînement à la vapeur et la substance à isoler, puis un isolement complet de la substance recherchée, tandis que tout le composé organique a été entraîné. L'entraînement à la vapeur est une technique bien connue (voir par exemple Encyclopedia Britannica, éd. 1970, vol. 7, p. 497, Steam Distillation).

Avantageusement, le composé organique suivant l'invention est une amine aromatique, comme par exemple de l'aniline, de la p-toluidine ou de la 3-méthyl-2-naphtylamine. On peut bien sûr également prévoir des dérivés ou isomères de ces substances. Parmi ceux-ci on peut par exemple citer leurs sels, comme du phosphate, du sulfate ou du chlorure d'aniline, ou des dérivés alkyle inférieur, par exemple de la méthylaniline, ou encore des dérivés nitro, par exemple de la nitroaniline. D'autres substances pourraient satisfaire également aux critères énoncés dans le procédé. Ce sont par exemple du pyrrole, du thiophène, du o-crésol, du C₇H₈O (notamment du m-crésol), du C₆H₁₀ClNH₂ (notamment du monochloro-2-méthyl-pent-2-ène), du C₅H₁₀S (notamment de l'éthiothiolprop-1-ène), ou du C₄H₆Cl₂O₂ (notamment du dichloroacétate d'éthyle), ainsi que leurs dérivés ou isomères.

Il faut noter qu'il est connu depuis longtemps déjà que l'aniline est aisément volatile en présence de vapeur d'eau (The Index Merck, 10^{c} éd., 1983, n° 681).

Suivant une forme avantageuse du procédé suivant l'invention, l'étape d'entraînement à la vapeur d'eau comprend une injection de vapeur sur le précipité à l'état de gâteau de filtration, et un entraînement par la vapeur injectée du composé organique. Le gâteau de filtration, qui se présente sous une forme très stable et parfaitement stockable dans les conditions ambiantes, peut ainsi être soumis soit directement, soit ultérieurement et/ou ailleurs à un entraînement à la vapeur, sans traitement préalable. Dans le domaine de la purification de H₃ PO₄, on évite ainsi les grands problèmes de stockage et de transport de l'acide "vert" instable de la technique actuelle.

Selon la nature du composé organique à entraîner, on choisira une vapeur d'une substance déterminée. Par exemple de la vapeur d'eau dans le cas d'aniline, de la vapeur de benzène pour du pyrrole ou du thiophène, ou encore de l'éther pour

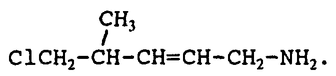

On peut prévoir d'autres modes d'entraînement à la vapeur que celui par injection, et notamment, dans le cas d'un entraînement à la vapeur d'eau, un mélange du précipité et d'eau liquide. On porte alors l'eau à ébullition et celle-ci entraîne avec elle le composé organique à entraîner.

Suivant une forme préférée du procédé suivant l'invention, il comprend ladite au moins une addition du composé organique à un état brut, et en outre, à la suite de l'étape d'entraînement à la vapeur, une séparation du composé organique à l'état pur, à partir de la vapeur d'entraînement liquéfiée, et éventuellement un recyclage de ce composé organique pur ou du composé organique avec de la vapeur d'entraînement liquéfiée dans l'étape d'addition. On peut donc procéder ainsi à une purification simultanée de l'agent utilisé pour extraire à l'état purifié une substance contenue dans un milieu liquide. Les impuretés aussi bien du composé organique brut précité que du milieu liquide à traiter sont récupérées dans le filtrat obtenu lors de la filtration du précipité.

Suivant une forme perfectionnée du procédé suivant l'invention, il comprend
- une première addition dudit composé organique au milieu liquide, en une quantité appropriée pour obtenir une modification de solubilité dans le milieu d'une ou de plusieurs impuretés présentes en provoquant une précipitation ou coprécipitation de celles-ci,
- une séparation de la ou des impuretés précipitées ou coprécipitées,
- une deuxième addition au milieu liquide restant dudit composé organique, qui, totalisée à la première addition, atteint ladite quantité suffisante pour provoquer une précipitation dudit produit de réaction équilibrée. Dans un tel cas, le composé organique qui agit comme modificateur de solubilité est capable d'induire, avant la précipitation à laquelle il participe lui-même, une précipitation d'une ou de plusieurs impuretés. Dans le cas de la purification d'acide phosphorique, une première addition d'aniline peut ainsi modifier la solubilité par modification du pH et obtenir une précipitation de sulfate de Ca à l'état pur.

Par étape de modification de solubilité, il faut entendre dans la présente invention non seulement une modification du pH, mais aussi par exemple un changement de solvant ou toute autre technique de type analogue, connue de l'homme de métier.

D'autres caractéristiques de l'invention sont indiquées dans les revendications qui suivent.

D'autres détails et particularités de l'invention ressortiront aussi de la description donnée ci-après, à titre non limitatif, et avec référence aux dessins annexés.

La figure 1 représente une forme de réalisation de module de modification de solubilité du liquide à traiter qui peut être mis en oeuvre dans le procédé suivant l'invention.

La figure 2 représente une forme de réalisation de module de précipitation qui peut être mis en oeuvre dans le procédé suivant l'invention.

La figure 3 représente une forme de réalisation de module de régénération qui peut être mis en oeuvre dans le procédé suivant l'invention.

Sur les différents dessins, les éléments identiques ou analogues sont désignés par les mêmes références.

Dans les formes de réalisation illustrées, on explique le procédé suivant l'invention en se basant sur un mode de réalisation particulier, celui de la production et de la purification d'acide phosphorique.

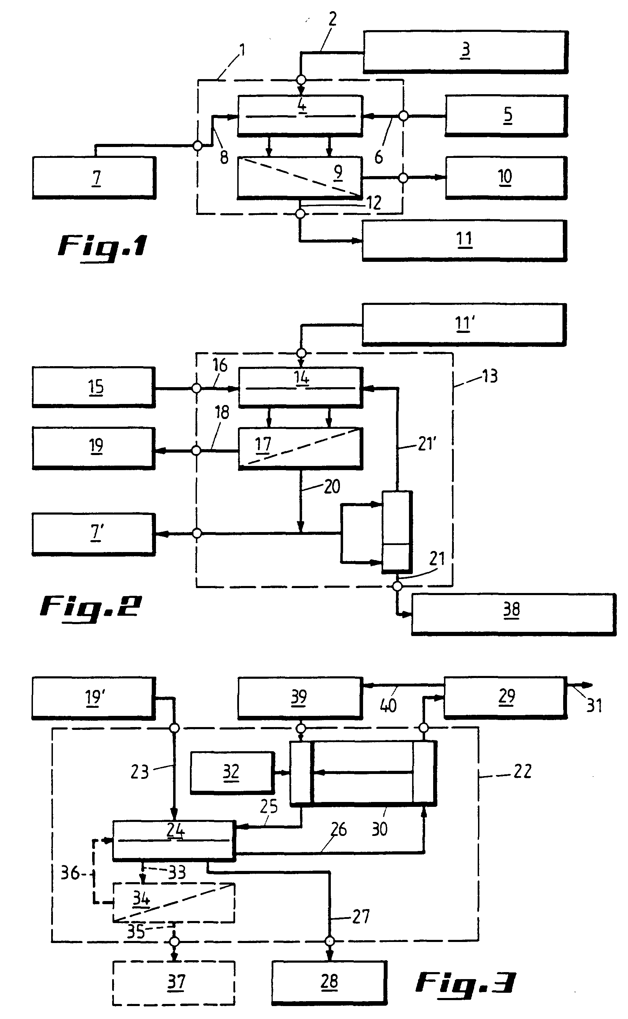

Dans le module de changement de solubilité 1 illustré sur la figure 1, on introduit dans un récipient 4, par le conduit 2, une solution brute d'acide phosphorique 3 résultant par exemple de l'attaque du minerai par de l'acide sulfurique (procédé de voie humide). On dilue cette solution à une concentration d'environ 20 à 25% de H₃PO₄, par exemple par addition en 8 d'eaux mères 7 résultant du procédé. Un composé organique 5 suivant l'invention, par exemple de l'aniline brute, d'un coût très favorable, est introduit en 6 dans le récipient 4. Avantageusement, l'aniline est dispersée sous forme d'une émulsion/solution aqueuse. L'aniline introduite, en tant que base faible, induit dans le milieu acide une modification de pH pour l'amener dans une fourchette comprise entre 1,3 et 5, de préférence entre 2,0 et 3,5, qui, dans le présent exemple, provoque, sans apport d'énergie, une précipitation de sulfate de calcium sous une forme beaucoup plus aisément filtrable que dans les procédés actuels. Contrairement aux procédés suivant l'état actuel de la technique, où on ajoute des carbonates à l' "acide vert", on obtient ici des sulfates non hydratés et fort pauvres en éléments, tels que U, Cs, Cd, As, F, etc... qui restent dans le filtrat. La solution acide traitée dans le récipient 4 est filtrée dans le filtre 9. Le précipité de sulfate de calcium est récupéré en 10, pour une mise en valeur par exemple dans l'industrie du plâtre. Le filtrat 11 contient une solution de H₃PO₄, l'aniline et les impuretés autres que celles déjà filtrées, et il est évacué en 12 hors du filtre 9.

Le liquide 11' (filtrat 11 du module 1) est alors passé dans le module de précipitation 13 représenté sur la figure 2, et il est introduit dans le récipient 14 à une teneur d'acide phosphorique avantageusement comprise entre 12% et 40%. On introduit en outre en 16, de préférence sous forme dispersée, une quantité complémentaire d'aniline brute 15 de façon que le rapport pondéral entre l'aniline et l'acide soit compris entre 0,5 et 1,5, de préférence de 1,2. Cette opération est avantageusement menée entre 10°C et 80°C. De préférence, une agitation sera prévue dans le récipient 14 par un agitateur courant, non représenté. Avantageusement, le régime turbulent obtenu présentera un coefficient N³D² compris entre 2 et 4, N étant la vitesse en tours/secondes et D le diamètre en mètre de l'agitateur. Cette agitation est prévue pour permettre une bonne diffusion de l'aniline dans le milieu liquide et éviter une accumulation de précipités à l'endroit de l'addition.

Il est évident que ces données sont valables dans le cas de l'addition d'aniline à une solution d'acide phosphorique et qu'elles peuvent être modifiées en fonction de la substance à épurer et du composé organique utilisé dans ce but.

En l'espace de 5 à 30 minutes, il se forme dans le récipient 14 un précipité de phosphate d'aniline, C₆H₅NH₂.H₃PO₄ très aisément filtrable. Le mélange formé est transféré dans le filtre 17 qui peut être n'importe quel filtre approprié pour cette opération, par exemple un filtre-presse. Le précipité formé est évacué en 18 du filtre 17, sous la forme d'un gâteau de filtration 19 constitué dans le présent exemple de cristaux de phosphate d'aniline. Ce précipité peut à ce moment être éventuellement lavé par une solution saturée de phosphate d'aniline.

Contrairement aux solutions intermédiaires instables obtenues dans les procédés de la technique antérieure, qui occasionnent d'importants frais et désagrément de nettoyage des cuves de stockage et des soutes de cargos ou des difficultés de titration en raison de suspensions et de précipitations ultérieures à la filtration, le gâteau de cristaux de phosphate d'aniline est stable aux températures ambiantes. Il peut aisément être entreposé pour en extraire ultérieurement ou ailleurs l'acide phosphorique par simple action de la vapeur d'eau, ainsi qu'on va le décrire dans la suite.

Un filtrat, appelé eau mère, est obtenu en 20. Il peut être partiellement recyclé dans le récipient 14, par l'intermédiaire du conduit 21', pour ajuster la concentration en P₂O₅ de la solution acide à traiter, ainsi que dans le récipient 4 par l'intermédiaire du conduit 8 et du réservoir 7, déjà représentés sur la figure 1 (réservoir 7' sur la figure 2). Ces multiples recyclages permettent aussi de minimiser les pertes en P₂O₅ entre la solution brute et le gâteau de filtration 19. Les eaux mères 38 non recyclées ne contiennent plus que des quantités de P₂O₅ ne dépassant pas les 20% et de faibles quantités d'acide sulfurique et d'aniline, et elles contiennent encore de l'eau et surtout des impuretés, telles que F, Cd, As, etc... Les eaux mères 38 non recyclées sont évacuées du module 13 en 21, d'où elles peuvent être éventuellement traitées comme décrit dans la suite. L'évacuation de tous les éléments indésirables par le filtrat 38, pour ne garder que l'acide phosphorique purifié et l'aniline purifiée dans le gâteau de filtration, permet d'envisager la mise en valeur de gisements de phosphates jusqu'ici inexploités en raison de leur trop haute teneur en éléments polluants, tout en obtenant parallèlement du gypse pur.

Sur la figure 3 est illustré un module d'entrainement à la vapeur 22 suivant l'invention, dans le cas présent à la vapeur d'eau.

Ce module comporte un récipient 24 dans lequel, en 23, le gâteau de filtration 19' (gâteau 19 du module de précipitation 13) est introduit. Simultanément de l'eau 39 est introduite sous forme de vapeur en 25 dans le récipient 24. Dans l'exemple illustré on envisage une hydrolyse du filtrat par injection sur le gâteau de filtration d'environ 1 à 2 kg de vapeur d'eau par kg de gâteau. Celle-ci présentera avantageusement une température comprise entre 40°C et 200°C, de préférence entre 40°C et 110°C. L'entraînement à la vapeur se fera donc de préférence sous vide. L'acide, obtenu en 33, est filtré dans le récipient 34 d'où on extrait en 35 un acide phosphorique pur. Celui-ci ne nécessite plus une concentration, car elle peut ajustée directement par le rapport pondéral utilisé vapeur d'eau/P₂O₅ du gâteau. Le gâteau 36 constitué de la fraction éventuellement non hydrolysée en 24 est recyclé pour être soumis à nouveau à l'action de la vapeur.

A partir du récipient 24, de la vapeur de H₂O et d'aniline est éliminée en 26 et transférée par exemple vers un dispositif de décantation 29, où les deux composants peu miscibles à l'état liquide sont très facilement séparés. Pendant ce transfert, on peut envisager un passage à travers un récupérateur de chaleur 30, permettant une récupération de calories pour l'eau 39 pénétrant dans le module 22. L'apport principal, ou exclusif selon les cas, de chaleur à l'eau entrant dans le module 22 est fourni par ailleurs à l'aide du dispositif de chauffage 32.

Par l'intermédiaire du conduit 40, l'eau provenant du décanteur 29 peut être recyclée dans l'entraînement à la vapeur d'eau tandis que, en 31, de l'aniline pure peut être soit recyclée en 5 (fig. 1) et/ou en 15 (fig.2), soit être utilisée dans d'autres domaines de l'industrie. Le procédé consiste donc en une double purification simultanée, celle de l'acide phosphorique et celle de l'aniline.

En variante, entre la récupération du gâteau de filtration 19 en 18 (voir figure 2) et son introduction en 23 dans le récipient 24 (gâteau 19' sur la figure 3), on peut aussi envisager l'introduction du gâteau 19 dans un réacteur non représenté dans lequel le gâteau est mélangé à un composé alcalin ou azoté, par exemple du KOH, du NH₃ ou de l'urée. L'aniline est alors déplacée de son précipité en faveur d'un phosphate de métal alcalin, d'ammonium ou d'urée par exemple. Ce produit est introduit dans le récipient 24, l'aniline est entraînée à la vapeur d'eau comme décrit ci-dessus et une solution du phosphate recherché est récupérée en 27, dans le récipient 28.

L'acide phosphorique pur obtenu en 37 peut aussi être élevé en qualité par un traitement classique de cristallisation et de décoloration, par exemple à l'eau oxygénée et au charbon actif qui le débarrassent des matières organiques, en particulier des éventuelles traces d'aniline subsistantes, si celles-ci sont indésirables dans les applications de l'acide phosphorique.

Il faut noter que le passage dans un module de changement de solubilité 1, tel que celui illustré sur la figure 1, ne s'impose pas nécessairement dans tous les cas. On peut par exemple imaginer d'avoir à traiter un "acide vert", c'est-à-dire un acide brut déjà partiellement épuré, notamment de ses sulfates, par les procédés classiques, et ayant une teneur de 40 à 50% en P₂O₅. Dans ce cas, la solution à traiter 11', c'est-à-dire l'acide vert dans ce cas, est introduite directement dans le récipient 14 du module de précipitation illustré sur la figure 2.

Comme il a été dit plus haut, le procédé illustré est donné à titre d'exemple avec de l'aniline et de l'acide phosphorique. On peut prévoir de purifier et séparer d'autres substances et par exemple en profiter pour valoriser certaines substances contenues dans un milieu liquide.

Nous pourrions prendre, à nouveau à titre d'exemple non limitatif, les eaux mères 38 récupérées en 21, à la sortie du module de la figure 2.

On peut envisager de faire passer ce milieu liquide par une nouvelle étape correspondant à celles décrites précédemment. Dans le module illustré à la figure 1, la solution 3 consiste donc en ces eaux mères contenant des impuretés telles que F, Cd, As, etc... et d'autres composants valorisables. Cette solution est introduite dans le récipient 4 et son pH est modifié par apport d'aniline 5, éventuellement brute, de façon à atteindre dans le cas présent une gamme de 2,4 à 6,5, de préférence de 3,6 à 6,5. A ce pH le filtrat est débarrassé des impuretés sous la forme d'une précipitation qui est éliminée en 10 par filtration dans le filtre 9. Le filtrat 11 est alors introduit dans le module de précipitation illustré sur la figure 2 (milieu 11'). Le précipité est filtré en 17 sous la forme d'un gâteau de filtration 19, puis il est soumis au traitement d'un module d'entraînement à la vapeur d'eau, tel qu'illustré sur la figure 3. Là la vapeur entraîne de l'aniline purifiée, qui est séparée par exemple par décantation en 29, tandis qu'on récupère en 28 un concentré d'impuretés d'un volume nettement plus faible, pour le même filtrat initial, que les concentrats obtenus par les procédés actuels.

En variante, cette même technique peut être utilisée pour extraire, cette fois par étapes successives, différents groupes d'impuretés des eaux mères 38 récupérées en 21, à la sortie du module de la figure 2. On joue pour cela sur les gammes de pH et de températures, ce qui permet par exemple d'isoler d'abord le fluor la cadmium et l'arsenic, puis le fer, le magnésium et l'aluminium, et ensuite les métaux lourds radioactifs et les terres rares.

La présente invention va à présent être expliquée de manière plus détaillée à l'aide d'exemples de réalisation non limitatifs.

### Exemple 1

Dans un réacteur agité, on introduit 500 ml d'acide phosphorique antérieurement obtenu, contenant 10% de P₂O₅, et on y ajoute 30 g de minerai (33% de P₂O₅). La réaction se fait entre 35°C et 40°C pendant 1/2 h, 7 g du résidu sec non attaqué sont écartés à l'aide d'un filtre, 480 ml de filtrat sont réintroduits dans un autre réacteur agité, où on ajoute 25 g de H₂SO₄ à une concentration supérieure à 99%. La réaction se fait à une température entre 35°C et 40°C pendant 1/2 h, le sulfate de calcium hydraté formé est séparé par une simple filtration, la masse de gâteau humide est de 92 g et d'une pureté supérieure à 96%, le volume du filtrat est de 320,5 ml et le gâteau est lavé avec 180 ml de H₂O.

Dans un autre réacteur on mélange 67,83 ml du filtrat et 25 g des eaux de lavage avec 20 g d'aniline; la réaction se fait en 15 minutes à une température de 20°C; la pulpe formée est passée par un filtre où on récupère 35 g de gâteau de phosphate d'aniline humide d'une pureté de 99% et 71,75 g de filtrat.

L'acide phosphorique obtenu après séparation de l'aniline par entraînement est 10,78 g à 54% de P₂O₅.

L'analyse est la suivante :

| | |
|---|---|
| P₂O₅ | 54% |
| Ca | < 0,05 |
| F | < 0,05 |
| SO₄ | 1,5% |
| Cd | < 1 ppm |
| As | < 1,5 ppm |
| Fe | < 10 ppm |
| Al | 41,3 ppm |
| Mg | 80 ppm |
| K | 7 ppm |
| Na | < 10 ppm |

Le gâteau et le filtrat sont alors respectivement soumis à des opérations telles que décrites dans l'exemple 2, et dans l'exemple 5 ci-dessous.

### Exemple 2

On met en oeuvre 100 g de solution d'acide phosphorique brut obtenue par un procédé courant par voie humide et ayant une teneur de 47,7% en P₂O₅ (acide vert). Cette solution répond à l'analyse suivante :

| Teneurs en microgr/ml (ppm) : | | | | | |
|---|---|---|---|---|---|
| As | 23 | Mg | 3050 | K | 728 |
| Cu | 132 | Na | 803 | Si | 239 |
| Al | 491 | Pb | 1 | U | 92 |
| Ca | 96 | Cd | 2 | F⁻ | 1260 |
| Fe | 2750 | Ni | 12 | SO4⁼ | 33400 |

| Teneur en nanogr/ml (ppb) : | | | | | |
|---|---|---|---|---|---|
| Hg | 5 | | | | |

Elle est diluée dans le récipient 14 du module 13 (figure 2) avec 238 g d'eau, pour ramener sa concentration en P₂O₅ à 14,1%. Elle est alors additionnée de 74 g d'aniline. Après précipitation, filtrage et lavage du précipité (gâteau) de "aniline. H₃PO₄", on retire en 19 76 g (poids sec) de gâteau et, en 38, 162,4 g de filtrat destiné à suivre notamment des opérations de valorisation ultérieures. Le gâteau est alors introduit dans le récipient 24 du module 22 (figure 3) où l'action de vapeur d'eau sur le gâteau dans un rapport pondéral de 2/1 libère de l'acide phosphorique (en 28) qui répond à l'analyse suivante, caractéristique d'une solution purifiée d'une teneur de 41,5% en P₂O₅ :

| Teneur en microgr/ml : | | | | | |
|---|---|---|---|---|---|
| As | < 0,5 | Mg | 59,6 | K | < 3 |
| Cu | 1,4 | Na | 6,3 | Si | 5,2 |
| Al | 4,6 | Pb | < 1 | U | < 2 |
| Ca | 36 | Cd | 1,6 | F | 13,2 |
| Fe | 32 | Ni | 1,3 | SO4 = | (32) |

| Teneur en nanogr/ml (ppb) : | | | | | |
|---|---|---|---|---|---|
| Hg | < 5 | | | | |

### Exemple 3

Dans un réacteur agité, on introduit 0,5 litre d'acide phosphorique obtenu par un procédé par voie humide à l'acide sulfurique, contenant 55% de P₂O₅, 67 ppm de Cd et 133 ppm d'U. Après dilution, on y ajoute 520 grammes d'aniline. Le précipité formé est filtré et lavé. Après hydrolyse du précipité par de la vapeur d'eau et entraînement de l'aniline par cette vapeur, l'acide phosphorique récupéré témoigne d'un taux d'élimination des impuretés de 98,5% : il contient moins de 1 ppm de Cd et moins de 2 ppm de U.

### Exemple 4

Dans un réacteur agité, on introduit 0,35 litre d'acide phosphorique de voie humide sulfurique contenant 32,4% de P₂O₅, 40 ppm de Cd et 78 ppm d'U. On y ajoute 260 grammes d'aniline. Un précipité se forme qui est lavé et filtré. Après entraînement à la vapeur de l'aniline, l'acide phosphorique restant contient moins de 0,5 ppm de Cd et moins de 1 ppm d'U.

### Exemple 5

Dans un réacteur agité on introduit 500 g de filtrat aqueux obtenu en 38 dans le module 13 de la figure 2. Il répond à l'analyse suivante : 7% de P₂O₅, 0,1 % de Fe₂O₃ et 0,12% de Al₂O₃ ainsi que 0,03% de CaO. On mélange cela avec 85 g d'aniline à un pH > 5 à 102°C. Un précipité d'impuretés d'une masse de 7,5 g se forme et il est écarté pour filtration et le filtrat est refroidi à 10°C pour cristalliser 130 g de phosphate d'aniline d'une pureté supérieure à 99%. Le gâteau est traité selon la figure 3.

Il doit être entendu que la présente invention n'est en aucune façon limitée aux modes de réalisation décrits ci-dessus et que bien des modifications pourraient y être apportées sans sortir du cadre des revendications.

On peut par exemple aussi imaginer d'utiliser, lors des différentes phases successives du procédé, non plus toujours le même composé organique, mais des composés organiques différents pour autant qu'ils soient tous conformes à l'invention.

## Revendications

1. Procédé de purification d'acide phosphorique et/ou de ses dérivés par extraction à partir d'un milieu liquide contenant de l'acide phosphorique, comprenant
- au moins une addition au milieu liquide d'un composé organique, entrainable par une vapeur, qui présente une molécule de caractère acido-basique au sens de Lewis dû à au moins un atome de N, O et/ou S formant un ou des sites actifs pourvus d'un doublet électronique libre, ce ou ces doublets électroniques libres étant en résonance avec au moins un autre doublet porté par la molécule, ce composé comportant éventuellement en outre au moins un atome d'hydrogène soumis à une électronégativité issue d'un desdits sites actifs, cette au moins une addition étant effectuée en une quantité suffisante pour donner lieu à un produit d'une réaction équilibrée entre le composé organique et ledit acide phosphorique et/ou dérivés de celui-ci, réaction où la différence de pKa entre ces derniers est comprise entre 0,1 et 5, et pour provoquer une précipitation de ce produit de réaction équilibrée sous la forme d'un précipité,
- une séparation par filtration du précipité et d'un filtrat contenant des impuretés,
- un entraînement à la vapeur précitée du composé organique susdit à partir du précipité, et
- une récolte sous forme purifiée et isolée dudit acide phosphorique et/ou dérivés de celui-ci à isoler.

2. Procédé suivant la revendication 1, **caractérisé en ce que** le composé organique est choisi parmi le groupe comprenant les amines aromatiques, du pyrrole, du thiophène, du o-crésol, du m-crésol, du monochloro-2-méthylpent-2-ène, de l'éthiothiolprop-1-ène, ou du dichloroacétate d'éthyle, ainsi que des dérivés ou isomères de ces composés.

3. Procédé suivant la revendication 2, **caractérisé en ce que** l'amine aromatique est de l'aniline, de la p-toluidine ou de la 3-méthyl-2-naphtylamine, ou leurs sels, tels que leurs phosphates, sulfates ou chlorures, ou encore leurs dérivés, tels que des dérivés alkyle inférieur ou nitro, ou leurs isomères.

4. Procédé suivant l'une des revendications 1 à 3, **caractérisé en ce que** ladite au moins une addition comprend une agitation du liquide pour diffuser dans celui-ci le composé organique, qui est introduit éventuellement sous forme d'une émulsion/solution.

5. Procédé suivant l'une des revendications 1 à 4, **caractérisé en ce que** ladite au moins une addition s'effectue à une température comprise entre 10 et 80°C.

6. Procédé suivant l'une quelconque des revendications 1 à 5, **caractérisé en ce que** la filtration a lieu sous vide.

7. Procédé suivant l'une quelconque des revendications 1 à 6, **caractérisé en ce que**, lors de l'étape d'isolement, le précipité filtré est soumis à un lavage par une solution aqueuse saturée en le produit de réaction équilibrée précité.

8. Procédé suivant l'une quelconque des revendications 1 à 7, **caractérisé en ce que** l'étape d'entraînement à la vapeur comprend une injection de vapeur sur le précipité, à l'état de gâteau de filtration, et un entraînement du composé organique par la vapeur injectée.

9. Procédé suivant la revendication 8, **caractérisé en ce que** l'entraînement à la vapeur comprend une application de 1 à 2 kg de vapeur d'eau / kg de gâteau, à une température comprise entre 40 et 110°C.

10. Procédé suivant l'une quelconque des revendications 1 à 7, **caractérisé en ce que** l'étape d'entraînement à la vapeur comprend un mélange du précipité filtré dans de l'eau, et une ébullition de l'eau qui, à l'état vapeur, entraîne le composé organique susdit.

11. Procédé suivant l'une quelconque des revendications 1 à 10, **caractérisé en ce qu'**il comprend un traitement dudit acide phosphorique et/ou dérivés de celui-ci, récolté sous forme purifiée, pour éliminer des traces de substance organique, notamment par de l'eau oxygénée et ensuite par du charbon actif, pour obtenir une forme décolorée dudit acide phosphorique et/ou dérivés de celui-ci à isoler.

12. Procédé suivant l'une quelconque des revendications 1 à 11, **caractérisé en ce qu'**il comprend, après l'étape de séparation, une étape de stockage et/ou de transport du précipité filtré.

13. Procédé suivant l'une quelconque des revendications 1 à 12, **caractérisé en ce qu'**il comprend ladite au moins une addition du composé organique à un état brut et éventuellement un recyclage de ce composé organique dans l'étape d'addition, et **en ce qu'**il comprend éventuellement, lorsque le composé organique n'est pas recyclé à la suite de l'étape d'entraînement à la vapeur, une séparation du composé organique à un état purifié à partir de la vapeur d'entraînement liquéfiée.

14. Procédé suivant l'une quelconque des revendications 1 à 13, **caractérisé en ce qu'**il comprend en outre
une addition supplémentaire dudit composé organique audit filtrat séparé, en vue d'atteindre une quantité suffisante pour provoquer une précipitation et/ou coprécipitation de sels dudit composé organique avec une ou plusieurs impuretés, contenues dans le filtrat séparé,
une séparation des précipités et/ou coprécipités, sous la forme d'un gâteau de filtration, et d'un nouveau filtrat,
un entraînement à la vapeur précitée du composé organique à partir du gâteau de filtration, et
une récolte d'un concentré d'impuretés.

15. Procédé suivant l'une quelconque des revendications 1 à 14, **caractérisé en ce qu'**il comprend
- une première addition dudit composé organique au milieu liquide, en une quantité appropriée pour obtenir une modification de solubilité d'une ou de plusieurs impuretés présentes dans le milieu liquide, en provoquant une précipitation ou coprécipitation de celles-ci,
- une séparation de la ou des impuretés précipitées ou coprécipitées,
- une deuxième addition au milieu liquide restant dudit composé organique, qui, totalisée à la première addition, atteint ladite quantité suffisante pour provoquer ladite précipitation dudit produit de réaction équilibrée.

16. Procédé suivant l'une quelconque des revendications 1 à 15, **caracterisé en ce que** ledit composé organique est de l'aniline ou un de ses dérivés.

17. Procédé suivant la revendication 16, **caractérisé en ce qu'**il comprend en outre une attaque sulfurique de minerai de phosphate pour former une solution d'attaque,
un apport à la solution d'attaque d'une première partie de ladite quantité d'aniline ou d'un de ses dérivés, pour atteindre un pH d'une valeur comprise entre 1,3 et 5, de préférence de 2,0 à 3,5, à laquelle a lieu une précipitation de sulfate de calcium,
une séparation par filtration de sulfate de calcium à l'état pur, et d'un filtrat sous forme de solution aqueuse d'acide phosphorique, et
une addition à cette solution d'une deuxième partie de l'acide aniline ou d'un de ses dérivés, qui, totalisée à la première partie susdite, atteint ladite quantité suffisante pour provoquer une précipitation de phosphate d'aniline ou d'un de ses dérivés.

18. Procédé suivant l'une ou l'autre des revendications 16 et 17, **caractérisé en ce qu'**il comprend un ajustement préalable de la teneur en H₃PO₄ de la solution aqueuse d'acide phosphorique, à laquelle est ajoutée une quantité suffisante de ladite aniline ou d'un de ses dérivés pour provoquer une précipitation de phosphate d'aniline ou d'un de ses dérivés, à une valeur comprise entre 7% et 40%.

19. Procédé suivant l'une quelconque des revendications 1 à 13 et 15, **caractérisé en ce que** le milieu liquide est une solution aqueuse contenant de l'acide phosphorique et **en ce qu'**il comprend
une addition à cette solution d'aniline ou d'un de ses dérivés, éventuellement à l'état brut, dans un rapport pondéral entre l'aniline ou son dérivé et l'acide phosphorique compris entre 0,5 et 1,5, en vue d'atteindre ladite quantité suffisante pour provoquer une précipitation de phosphate d'aniline ou d'un de ses dérivés,
un isolement du phosphate d'aniline ou d'un de ses dérivés, sous la forme d'un précipité,
une évacuation d'un filtrat contenant des impuretés,
un déplacement de l'aniline ou de son dérivé dans le précipité par un composé alcalin ou azoté,
un entraînement à la vapeur de l'aniline pure ou de son dérivé à partir du précipité ayant subi un déplacement, et
une récolte d'un sel purifié d'acide phosphorique avec ce composé alcalin ou azoté.

20. Procédé suivant l'une quelconque des revendications 1 à 13, **caractérisé en ce que** le milieu liquide est une solution aqueuse contenant de l'acide phosphorique et de l'acide sulfurique et **en ce qu'**il comprend
- une addition à cette solution d'une première partie de ladite aniline ou d'un de ses dérivés, en une quantité appropriée pour atteindre un pH d'une valeur comprise entre 1,3 et 5, de préférence de 2,0 à 3,5, à laquelle a lieu une précipitation de sulfate de calcium,
- une séparation par filtration de sulfate de calcium et d'un filtrat sous forme de solution aqueuse d'acide phosphorique, et
- une addition à cette solution d'une deuxième partie de ladite aniline ou d'un de ses dérivés, qui, totalisée à la première partie susdite, atteint un rapport pondéral entre l'aniline ou son dérivé et l'acide phosphorique compris entre 0,5 et 1,5 et ainsi ladite quantité suffisante pour provoquer une précipitation de phosphate d'aniline ou d'un de ses dérivés,
- un isolement du phosphate d'aniline ou d'un de ses dérivés, sous la forme d'un précipité,
- une évacuation d'un filtrat contenant des impuretés,
- un déplacement de l'aniline ou de son dérivé dans le précipité par un composé alcalin ou azoté,
- un entraînement à la vapeur de l'aniline pure ou de son dérivé à partir du précipité ayant subi un déplacement, et
- une récolte d'un sel purifié d'acide phosphorique avec ce composé alcalin ou azoté.

21. Procédé suivant l'une quelconque des revendications 16 à 20, **caractérisé en ce qu'**il comprend en outre
une addition supplémentaire d'aniline ou d'un de ses dérivés audit filtrat séparé, éventuellement à l'état brut, en vue d'atteindre ladite quantité suffisante pour provoquer une précipitation et/ou coprécipitation de sels d'aniline ou de son dérivé avec une ou plusieurs impuretés,
une séparation des précipités et/ou coprécipités, sous la forme d'un gâteau, et d'un nouveau filtrat,
un entraînement à la vapeur de l'aniline pure ou de son dérivé à partir du gâteau de filtration, et
une récolte d'un concentré d'impuretés.

22. Utilisation du procédé suivant l'une quelconque des revendications 1 à 21, pour valoriser des eaux mères issues d'une production ou purification d'acide phosphorique.

23. Utilisation du procédé suivant l'une quelconque des revendications 15 à 21, pour fabriquer, à partir d'un milieu liquide résultant d'une attaque sulfurique de minerai de phosphate, du sulfate de calcium anhydre, pauvre en impuretés.

## Claims

1. Method of purification by extraction of phosphoric acid and/or derivatives thereof from a liquid medium containing phosphoric acid, comprising
- at least one addition to the liquid medium of an organic compound, which can be entrained by a vapour and which has a molecule of acidic-basic character in the Lewis sense due to at least one atom of N, O and/or S forming one or more active sites provided with a free electron pair, the free electron pair or pairs being in resonance with at least one other pair carried by the molecule, this compound possibly carrying as well at least one hydrogen atom subjected to an electronegativity coming from one of the said active sites, this at least one addition being carried out in a quantity sufficient to give rise to an equilibrium reaction product between the organic compund and said phosphoric acid and/or derivatives thereof, a reaction in which the difference in pKa between the latter lies between 0.1 and 5, and sufficient to cause a precipitation of this equilibrium reaction product in the form of a precipitate,
- a separation by filtration of the precipitate and of a filtrate containing impurities,
- an entrainment by the aforesaid vapour of the above-mentioned organic compound from the precipitate, and
- a yield in purified and isolated form of said phosphoric acid and/or derivatives thereof to be isolated.

2. Method according to Claim 1, **characterised in that** the organic compound is chosen from among the group comprising the aromatic amines, pyrrole, thiophen, o-cresol, m-cresol, monochloro-2-methyl-2-pentene, ethiothiol-1-propene or ethyl dichloroacetate, as well as the derivatives or isomers of these compounds.

3. Method according to Claim 2, **characterised in that** the aromatic amine is aniline, p-toluidine or 3-methyl-2-naphthylamine, or their salts, such as their phosphates, sulphates or chlorides, or else their derivatives, such as the lower alkyl or nitrogenous derivatives, or their isomers.

4. Method according to one of Claims 1 to 3, **characterised in that** said at least one addition comprises an agitation of the liquid in order to disperse in it the organic compound, which is possibly introduced in the form of an emulsion/solution.

5. Method according to one of Claims 1 to 4, **characterised in that** said at least one addition is carried out at a temperature lying between 10 and 80°C.

6. Method according to any one of Claims 1 to 5, **characterised in that** the filtration takes place under vacuum.

7. Method according to any one of Claims 1 to 6, **characterised in that**, during the separation stage, the filtered precipitate is subjected to washing by an aqueous solution saturated with the aforesaid equilibrium reaction product.

8. Method according to any one of Claims 1 to 7, **characterised in that** the stage of entrainment by vapour comprises an injection of vapour over the precipitate, in the form of a filter cake, and an entrainment of the organic compound by the injected vapour.

9. Method according to Claim 8, **characterised in that** the entrainment by vapour comprises an application of 1 to 2 kg of steam per kg of cake at a temperature lying between 40 and 110°C.

10. Method according to any one of Claims 1 to 7, **characterised in that** the stage of entrainment by vapour comprises a mixture of the filtered precipitate in water, and a boiling of the water which, in the vapour state, entrains the above-mentioned organic compound.

11. Method according to any one of Claims 1 to 10, **characterised in that** it comprises a treatment of said phosphoric acid and/or derivatives thereof, collected in purified form, in order to remove traces of organic substance, particularly by hydrogen peroxide and subsequently by actived carbon, in order to obtain a decolourised form of said phosphoric acid and/or derivatives thereof to be isolated.

12. Method according to any one of Claims 1 to 11, **characterised in that** it comprises, after the separation stage, a stage of storage and/or transport of the filtered precipitate.

13. Method according to any one of Claims 1 to 12, **characterised in that** it comprises said at least one addition of the organic compound in a crude state and possibly a recycling of this organic compound in the addition stage, and **in that** it possibly comprises, when the organic compound is not recycled following the stage of entrainment by vapour, a separation of the organic compound in a purified state from the liquefied entrainment vapour.

14. Method according to any one of Claims 1 to 13, **characterised in that** it further comprises
an additional addition of saif organic compound to said separated filtrate in order to reach a quantity sufficient to cause a precipitation and/or coprecipitation of salts of said organic compound with one or several impurities, contained in the separated filtrate,
a separation of precipitates and/or coprecipitates, as a filtration cake, and of a new filtrate,
an entrainment by the aforesaid vapour ot the organic compound from the filtration cake, and
a yield of a concentrate of impurities.

15. Method according to any one of Claims 1 to 14, **characterised in that** it comprises
- a first addition of the said organic compound to the liquid medium, in a quantity appropriate for obtaining a modification of the solubility of one or more impurities present in the liquid medium, by causing a precipitation or coprecipitation of the said impurities,
- a separation of the precipitated or coprecipitated impurity or impurities,
- a second addition to the remaining liquid medium of the said organic compound which, added to the first addition, reaches the said sufficient quantity to cause said precipitation of the said equilibrium reaction product.

16. Method according to any one of Claims 1 to 15, **characterised in that** said organic compound is aniline or a derivative thereof.

17. Method according to Claim 16, **characterised in that** it comprises in addition a sulphuric acid attack on the phosphate ore in order to form an attack solution,
an input to the attack solution of a first part of the said quantity of aniline or a derivative thereof, so as to achieve a pH value lying between 1.3 and 5, preferably between 2.0 and 3.5, at which a precipitation of calcium sulphate takes place,
a separation by filtration of calcium sulphate in the pure state, and of a filtrate in the form of an aqueous solution of phosphoric acid, and
an addition to this solution of a second part of said aniline or derivative thereof which, added to the above-mentioned first part, reaches the said sufficient quantity to cause a precipitation of phosphate of aniline or of a derivative thereof.

18. Method according to either of Claims 16 and 17, **characterised in that** it comprises a prior adjustment of the H₃PO₄ concentration in the aqueous solution of phosphoric acid, to which is added a sufficient quantity of said aniline or derivative thereof to cause a precipitation of the phosphate of aniline or of a derivative thereof, to a value lying between 7% and 40%.

19. Method according to any one of Claims 1 to 13 and 15, **characterised in that** the liquid medium is an aqueous solution containing phosphoric acid and **in that** it comprises
an addition to this solution of aniline or of a derivative thereof, optionally in a raw state, in a weight ratio between aniline or the derivative thereof and phosphoric acid lying between 0.5 and 1.5, in order to reach said quantity sufficient to cause a precipitation of phosphate of aniline or of a derivative thereof,
an isolation of phosphate of aniline or of a derivative thereof, as a precipitate,
a removal of a filtrate containing impurities,
a displacement of the aniline or of the derivative thereof in the precipitate by the alcaline or nitrogenous compound,
an entrainment by vapour of pure aniline or derivative thereof from the precipitated submitted to a displacement, and
a yield of a purified salt of phosphoric acid with said alcaline or nitrogenous compound.

20. Method according to any one of Claims 1 to 13, **characterised in that** the liquid medium is an aqueous solution containing phosphoric acid and sulphuric acid, and **in that** it comprises
an addition to the solution of a first part of said aniline or derivative thereof, in a quantity appropriate for reaching a pH value lying between 1.3 and 5, preferably between 2.0 and 3.5, at which a precipitation of calcium sulphate takes place,
- a separation by filtration of calcium sulphate and of a filtrate in the form of an aqueous solution of phosphoric acid, and
- an addition to this solution of a second part of said aniline or derivative thereof which, added to the above-mentioned first part, reaches a weight ratio between aniline or derivative thereof and phosphoric acid lying between 0.5 and 1.5 and so said quantity sufficient to cause a precipitation of phosphate of aniline or of a derivative thereof,
- an isolation of phosphate of aniline or of a derivative thereof, as a precipitate,
- a removal of a filtrate containing impurities,
- a displacement of aniline or derivative thereof in the precipitate by an alcaline or nitrogenous compound,
- an entrainment by vapour of pure aniline or derivative thereof from the precipitate submitted to a displacement, and
- a yield of a purified salt of phosphoric acid with said alcaline or nitrogenous compound.

21. Method according to any one of Claims 16 to 20, **characterised in that** it further comprises
an additional addition of aniline or of a derivative thereof to said separated filtrate in order to reach said quantity sufficient to cause a precipitation and/or coprecipitation of salts of aniline or derivative thereof with one or several impurities,
a separation of precipitates and/or coprecipitates, as a filtration cake, and of a new filtrate,
an entrainment by vapour of pure aniline or derivative thereof from the filtration cake, and
a yield of a concentrate of impurities.

22. Use of the method according to any one of Claims 1 to 21 in order to enhance the economic value of mother liquors arising from a production or purification of phosphoric acid.

23. Use of the method according to any one of Claims 15 to 21, for manufacturing anhydrous calcium sulphate, with a low content of impurities, from a liquid medium issuing from a sulphuric attack of phosphate ore.

## Patentansprüche

1. Verfahren zur Reinigung von Phosphorsäure und/oder ihren Derivaten durch Extraktion aus einem flüssigen Medium, das Phosphorsäure enthält, das umfasst:
- mindestens eine Zugabe einer von Wasserdampf mitgenommenen organischen Verbindung zum flüssigen Medium, die ein Molekül mit im Lewisschen Sinne basisch-saurer Eigenschaft auf Grund von mindestens einem N-, O- und/oder S-Atom hat, das eine oder mehrere aktive Stellen bildet, die mit einem freien Dublett ausgestattet sind, wobei dieses freie Dublett oder diese freien Dublette mit mindestens einem anderen Dublett in Resonanz mit mindestens einem anderen, von dem Molekül getragenen Dublett stehen, welche Verbindung eventuell ferner mindestens ein Wasserstoffatom umfasst, das einer Elektronegativität unterworfen ist, die von einer der aktiven Stellen herrührt, wobei zumindest eine Zugabe in einer Menge erfolgt, die ausrelcht, um zu einem Produkt einer Gleichgewichtsreaktion zwischen der organischen Verbindung und der Phosphorsäure und/oder ihrer Derivate zu führen, einer Reaktion, bei der die pKa-Differenz zwischen letzteren 0,1 bis 5 beträgt, und zum Auslösen eines Ausfällens dieses Produkts der Gleichgewichtsreaktion in Form eines Präzipitats zu führen,
- eine Trennung des Präzipitats und eines Fremdstoffe enthaltenden Filtrats durch Filtration,
- ein vorgenanntes Mitnehmen der vorgenannten organischen Verbindung aus dem Präzipitat durch Wasserdampf, und
- eine Gewinnung der zu isolierenden Phosphorsäure und/oder ihrer Derivate in gereinigter und isolierter Form.

2. Verfahren nach Anspruch 1, **dadurch gekennzeichnet, dass** die organische Verbindung aus der aus aromatischen Aminen, Pyrrol, Thiophen, O-Kresol, M-Kresol, Monochlor-2-Methylpent-2-en, Ethlothiolprop-1-en oder Ethyldichloracetat gebildeten Gruppe sowie aus Derivaten oder Isomeren dieser Verbindungen ausgewählt wird.

3. Verfahren nach Anspruch 2, **dadurch gekennzeichnet, dass** das aromatische Amin Anilin, P-Toluidin oder 3-Methyl-2-Naphtylamin oder deren Salze wie ihre Phosphate, Sulfaten oder Chloride oder aber ihre Derivate wie Niederalkyl- oder Nitroderivate oder ihre Isomere aufweist.

4. Verfahren nach einem der Ansprüche 1 bis 3, **dadurch gekennzeichnet, dass** die mindestens eine Zugabe ein Umrühren der Flüssigkeit umfasst, um die organische Verbindung in dieser zu diffundleren, die eventuell in Form einer Emulsion/Lösung zugegeben wird.

5. Verfahren nach einem der Ansprüche 1 bis 4, **dadurch gekennzeichnet, dass** die mindestens eine Zugabe bei einer Temperatur von 10 bis 80°C erfolgt.

6. Verfahren nach einem der Ansprüche 1 bis 5, **dadurch gekennzeichnet, dass** die Filtration unter Vakuum erfolgt.

7. Verfahren nach einem der Ansprüche 1 bis 6, **dadurch gekennzeichnet, dass** während des Isolierungsvorgangs das gefilterte Präzipitat mit einer wässrigen Lösung gewaschen wird, die mit dem vorgenannten Produkt aus einer Gleichgewichtsreaktion gesättigt ist.

8. Verfahren nach einem der Ansprüche 1 bis 7, **dadurch gekennzeichnet, dass** der Wasserdampfabmitnahmevorgang ein Einblasen von Wasserdampf auf das Präzipitat im Filterkuchenzustand sowie ein Mitnehmen der organischen Verbindung durch den eingeblasenen Wasserdampf umfasst.

9. Verfahren nach Anspruch 8, **dadurch gekennzeichnet, dass** das Mitnehmen mit Wasserdampf den Einsatz von 1 bis 2 kg Wasserdampf/kg Kuchen bei einer Temperatur von 40 bis 110°C umfasst.

10. Verfahren nach einem der Ansprüche 1 bis 7, **dadurch gekennzeichnet, dass** der Wasserdampfmitnahmevorgang eine Mischung aus dem in Wasser gefilterten Präzipitats und ein Sieden des Wassers umfasst, das im Dampfzustand die vorgenannte organische Verbindung mitnimmt.

11. Verfahren nach einem der Ansprüche 1 bis 10, **dadurch gekennzeichnet, dass** es eine Behandlung der Phosphorsäure und/oder ihrer Derivate umfasst, die In gereinigter Form erhalten wurde, zur Ausscheidung von Spuren organischer Substanz, insbesondere mittels Wasserstoffperoxid, und anschließend mit Hilfe von Aktivkohle, zum Erhalt einer farblosen Form der zu isolierenden Phosphorsäure und/oder ihrer Derivate.

12. Verfahren nach einem der Ansprüche 1 bis 11, **dadurch gekennzeichnet, dass** es nach dem Trennvorgang eine Lagerungs- und/oder Transportphase für das gefilterte Präzipitat umfasst.

13. Verfahren nach einem der Ansprüche 1 bis 12, **dadurch gekennzeichnet, dass** es die mindestens eine Zugabe der organischen Verbindung in einem Rohzustand und eventuell einer Wiederverwertung dieser organlschen Verbindung beim Zugabevorgang umfasst, und dass es eventuell, wenn die organische Verbindung nach dem mitnahmevorgang nicht wiederverwertet wird, eine Trennung der organischen Verbindung In einem gereinigten Zustand aus dem verflüssigten Mitnahmewasserdampf umfasst.

14. Verfahren nach einem der Ansprüche 1 bis 13, **dadurch gekennzeichnet, dass** es femer umfasst:
eine zusätzliche Zugabe der genannten organischen Verbindung zu dem getrennten Filtrat im Hinblick auf das Erreichen einer ausreichenden Menge zum Auslösen eines Ausfällens und/oder gemeinsamen Ausfällens von Salzen dieser organischen Verbindung mit einem oder mehreren Fremdstoffen, die in dem getrennten Filtrat enthalten sind,
eine Trennung der Niederschläge und/oder gemeinsamen Niederschläge in Form eines Filterkuchens und eines neuen Filtrats,
ein wie vorstehend beschriebenes Mitnehmen der organischen Verbindung mit Wasserdampf aus dem Filterkuchen, und
den Erhalt eines Konzentrats von Fremdstoffen.

15. Verfahren nach einem der Ansprüche 1 bis 14, **dadurch gekennzeichnet, dass** es umfasst:
- eine erste Zugabe der genannten organischen Verbindung zum flüssigen Medium in einer Menge, die geeignet ist, eine veränderte Löslichkeit eines oder mehrerer der in dem flüssigen Medium vorhandenen Fremdstoffe herbeizuführen, um ein Ausfällen oder gemeinsames Ausfällen derselben zu bewirken,
- eine Trennung des Fremdstoffs oder der Fremdstoffe, der sich abgesetzt hat bzw. die sich zusammen abgesetzt haben,
- eine zweite Zugabe der organischen Verbindung zum Rest des flüssigen Mediums, die zusammengenommen mit der ersten Zugabe die Menge ergibt, die ausreicht, um das Präzlpitat des Produkts aus der Gleichgewichtsreaktion zu bewirken.

16. Verfahren nach einem der Ansprüche 1 bis 15, **dadurch gekennzeichnet, dass** die organische Verbindung Anilin oder eines seiner Derivate ist.

17. Verfahren nach Anspruch 16, **dadurch gekennzeichnet, dass** es ferner eine Phosphatmineral-Schwefelätzung zur Herstellung einer Ätzlösung umfasst,
eine Zugabe eines ersten Teils der Menge Anilin oder eines seiner Derivate zur Ätzlösung zum Erreichen eines pH-Werts von 1,3 bis 5, vorzugswelse 2,0 bis 3,5, bei dem eine Ausfällung von Calclumsulfat stattfindet,
eine Trennung durch Filtration von Calclumsulfat im Rohzustand und eines Filtrats in Form einer wässrigen Phosphorsäurelösung, und
eine Zugabe eines zweiten Teils des Anilins oder eines seiner Derivate zu dieser Lösung, der zusammen mit dem ersten vorgenannten Teil die ausreichende Menge zum Auslösen eines Ausfällens von Anilinphosphat oder eines seiner Derivate ausreicht.

18. Verfahren nach einem der Ansprüche 16 und 17, **dadurch gekennzeichnet, dass** es eine vorherige Anpassung des H₃PO₄-Gehalts der wässrigen Phosphorsäurelösung umfasst, der eine ausreichende Menge Anilin oder eines seiner Derivate zum Auslösen des Ausfällens einer Menge an Anilinphosphat oder eines seiner Derivate mit einem Wert von 7 bis 40 % hinzugefügt wird.

19. Verfahren nach einem der Ansprüche 1 bis 13 und 15, **dadurch gekennzeichnet, dass** das flüssige Medium eine wässrlge Lösung ist, die Phosphorsäure enthält, sowie dadurch, dass es umfasst:
eine Zugabe von Anilin oder eines seiner Derivate zu dieser Lösung, eventuell in Rohform, und zwar in einem Gewichtsverhältnis zwischen dem Anilin oder seinem Derivat und der Phosphorsäure von 0,5 bis 1,5 im Hinblick auf den Erhalt der ausreichenden Menge für das Auslösen eines Ausfällens von Anilinphosphat oder von einem seiner Derivate,
eine Isolierung des Anilinphosphats oder eines seiner Derivate in Form eines Präzipitats,
eine Ausscheidung eines Filtrats, das Fremdstoffe enthält,
eine Verdrängung des Anilins oder seines Derivats in dem Präzipitat durch eine Alkali- oder Stickstoffverbindung.
ein Mitnehmen des Rohanllins oder seines Derivats aus dem Präzipitat, bei dem eine Verdrängung stattgefunden hat, durch Wasserdampf, und
die Gewinnung eines mit dieser Alkali- oder Stickstoffverbindung von Phosphorsäure gereinigten Salzes.

20. Verfahren nach einem der Ansprüche 1 bis 13, **dadurch gekennzeichnet, dass** das flüssige Medium eine wässrige Lösung ist, die Phosphorsäure und Schwefelsäure enthält, sowie dadurch, dass es umfasst:
- eine Zugabe eines ersten Teils des Anilins oder eines seiner Derivate zu dieser Lösung In einer zum Erreichen eines pH-Werts von 1,3 bis 5, vorzugsweise 2,0 bis 3,5, geeigneten Menge, bei dem eine Ausfällung von Calciumsulfat stattfindet,
- eine Trennung durch Filtration von Calciumsulfat und eines Filtrats in Form einer wässrigen Phosphorsäurelösung, und
- eine Zugabe eines zweiten Teils des Anilins oder eines seiner Derivate zu dieser Lösung, der zusammen mit dem ersten vorgenannten Teil
ein Gewichtsverhältnis von 0,5 bis 1,5 zwischen dem Anilin oder seinem Derivat und der Phosphorsäure und somit die ausreichende Menge zum Auslösen eines Ausfällens von Anilinphosphat oder eines seiner Derivate erreicht,
eine Isolierung des Anilinphosphats oder eines seiner Derivate in Form eines Präzipitats.
eine Ausscheidung eines Filtrats, das Fremdstoffe enthält,
eine Verdrängung des Anilins oder seines Derivats in dem Präzipitat durch eine Alkali- oder Stickstoffverbindung,
ein Mitnehmen des Rohanilins oder seines Derivats aus dem Präzipitat, bei dem eine Verdrängung stattgefunden hat, durch Wasserdampf, und
die Gewinnung eines mit dieser Alkali- oder Stickstoffverbindung von Phosphorsäure gereinigten Salzes.

21. Verfahren nach einem der Ansprüche 16 bis 20, **dadurch gekennzeichnet, dass** es ferner umfasst:
eine zusätzliche Zugabe von Anilin oder einem seiner Derivate zu dem getrennten Filtrat, eventuell in Rohform, im Hinblick auf den Erhalt der ausreichenden Menge zum Auslösen eines Ausfällens und/oder gemeinsamen Ausfällens von Anillnsalzen oder seinen Derivaten mit einem oder mehreren Fremdstoffen,
eine Trennung der Niederschläge und/oder gemeinsamen Niederschläge in Form eines Filterkuchens und eines neuen Filtrats,
ein Mltnehmen des Rohanilins oder seines Derivats mit Wasserdampf aus dem Filterkuchen, und
Erhalt eines Konzentrats von Fremdstoffen.

22. Verwendung des Verfahrens nach einem der Ansprüche 1 bis 21 zur Nutzbarmachung der aus einer Herstellung oder Reinigung von Phosphorsäure stammenden Mutterwässer.

23. Verwendung des Verfahrens nach einem der Ansprüche 15 bis 21 zur Herstellung von wasserfreiem Calciumsulfat, das kaum Fremdstoffe enthält, aus einem flüssigen Medium, das aus einer Schwefelätzung von Phosphatmineral hervorgegangen ist.
